# EUROPEAN PATENT APPLICATION

(11) **EP 4 801 045 A1**
(43) Date of publication of application: **02.09.2026**
(21) Application number: 24913627.6
(22) Date of filing: 19.12.2024
(51) Int. Cl.: H04N 21/485, H04N 21/422, H04N 21/45, H04N 21/442, H04N 21/488, H04N 21/466

(54) **ELECTRONIC DEVICE AND METHOD FOR CONTROLLING ELECTRONIC DEVICE**

(30) Priority: 29.12.2023 KR 20230196428; 20.02.2024 KR 20240024108
(71) Applicant: Samsung Electronics Co., Ltd., Suwon-si, Gyeonggi-do 16677 (KR)
(72) Inventor: SON, Jeongmin, Suwon-si Gyeonggi-do 16677 (KR); KANG, Donghun, Suwon-si Gyeonggi-do 16677 (KR); KIM, Seokhyun, Suwon-si Gyeonggi-do 16677 (KR); MOON, Joosun, Suwon-si Gyeonggi-do 16677 (KR); MOON, Jibum, Suwon-si Gyeonggi-do 16677 (KR); MIN, Yuri, Suwon-si Gyeonggi-do 16677 (KR); CHO, Eunjoo, Suwon-si Gyeonggi-do 16677 (KR); HAN, Sooyeon, Suwon-si Gyeonggi-do 16677 (KR); HONG, Junpyo, Suwon-si Gyeonggi-do 16677 (KR)
(74) Representative: Appleyard Lees IP LLP
(86) International application number: PCT/KR2024/020716
(87) International publication number: WO 2025/143684

(57) **Abstract**

Disclosed are an electronic device and a control method therefor. Specifically, the electronic device may: control a display to display content; acquire information about the context of the content; identify, on the basis of the information about the context and information about a usage history, at least one first operation that does not require user confirmation and at least one second operation that requires user confirmation among a plurality of operations related to the content; perform the at least one first operation; and control the display to display a user interface for the at least one second operation.

## Description

### [Technical Field]

This disclosure relates to an electronic device and a method for controlling the electronic device, and particularly, to an electronic device capable of providing a user interface fit for a user and a method for controlling the electronic device.

### [Background Art]

In recent years, with an advancement in the technologies, various types of functions (operations or services) have been provided by electronic devices. In particular, an electronic device may provide various types of contents, and with an advancement in the Internet of Things (IoT) technologies, various types of external devices may interact with the electronic device, such that the electronic device can provide various functions.

At a time when an electronic device provides various functions, a user interface allowing a user to readily use the functions provided by the electronic device needs to be provided.

However, a user interface of prior art is configured in a complex manner to provide large numbers of functions of an electronic device. Accordingly, in the case of prior art, it is difficult to identify what control function is used to obtain a result desired by a user, and manipulations need to be performed to identify a control function desired by the user, causing inconvenience to the user. Additionally, at this time, even a function that is not performable or not required in a current situation may be provided, adding inconvenience to the user.

### [Disclosure of Invention]

### [Solution to Problem]

The disclosure is to solve the above-described problems of prior art, and the objective of the disclosure is to provide an electronic device capable of providing a user interface fit for a user enjoying content, and a method for controlling the electronic device.

According to one or more embodiments, an electronic device includes a display, memory storing information on use history of a user, and one or more processors, the one or more processors configured to control the display to display content, obtain information on context of the content, identify, based on the information on context and the information on use history, at least one first operation requiring no confirmation of the user and at least one second operation requiring confirmation of the user among a plurality of operations relating to the content, perform the at least one first operation, and control the display to display a user interface relating to the at least one second operation.

Meanwhile, the information on context may include at least one among type information indicating a type of the content, first state information indicating an operation state of the electronic device, second state information indicating an operation state of an external device relating to the electronic device, and third state information indicating external states of the electronic device and the external device.

Meanwhile, the information on use history may include information on at least one of a frequency and a pattern in which the user uses at least one of the electronic device and the external device while the type of content is displayed on the display.

Meanwhile, the plurality of operations may include at least one of an operation of the electronic device, relating to the content, and an operation of the external device, relating to the content.

Meanwhile, the one or more processors may identify, as the at least one first operation, an operation associated with screen settings and sound settings relating to the content among the plurality of operations.

Meanwhile, the user interface may include a plurality of category items respectively corresponding to a plurality of categories relating to the at least one second operation, and the one or more processors may identify, based on a first user input selecting one among the plurality of category items being received, the at least one first operation and the at least one second operation among one or more operations corresponding to the selected category item, according to the information on context and the information on use history.

Meanwhile, the user interface may include at least one control item corresponding respectively to the at least one second operation, and the one or more processors may perform, based on a second user input selecting one among the at least one control item being received, a second operation corresponding to the selected control item.

Meanwhile, the one or more processors may update, based on at least one of the first user input and the second user input, the information on use history.

Meanwhile, the one or more processors may perform the at least one first operation, and then control the display to display the user interface, and the user interface may include at least one of a cancellation item for cancelling the at least one first operation performed and a change item for changing the at least one first operation performed to another operation.

Meanwhile, the one or more processors may identify, based on the information on context and the information on use history, a priority of each of the plurality of operations, and identify, based on the priority, one or more second operations to be displayed on the user interface among the at least one second operation, and the user interface may include information on the priority of each of the one or more second operations.

According to one or more embodiments, a method for controlling an electronic device includes displaying content, obtaining information on context of the content, identifying, based on the information on context and information on use history of a user, at least one first operation requiring no confirmation of the user and at least one second operation requiring confirmation of the user among a plurality of operations relating to the content, performing the at least one first operation, and displaying a user interface relating to the at least one second operation.

Meanwhile, the information on context may include at least one among type information indicating a type of the content, first state information indicating an operation state of the electronic device, second state information indicating an operation state of an external device relating to the electronic device, and third state information indicating external states of the electronic device and the external device.

Meanwhile, the information on use history may include information on at least one of a frequency and a pattern in which the user uses at least one of the electronic device and the external device while the type of content is displayed on the display.

Meanwhile, the plurality of operations may include at least one of an operation of the electronic device, relating to the content, and an operation of the external device, relating to the content.

Meanwhile, the identifying may include identifying, as the at least one first operation, an operation associated with screen settings and sound settings relating to the content among the plurality of operations.

Meanwhile, the user interface may include a plurality of category items respectively corresponding to a plurality of categories relating to the at least one second operation, and the identifying may include identifying, based on a first user input selecting one among the plurality of category items being received, the at least one first operation and the at least one second operation among one or more operations corresponding to the selected category item, according to the information on context and the information on use history.

Meanwhile, the user interface may include at least one control item corresponding respectively to the at least one second operation, and the method may further include performing, based on a second user input selecting one among the at least one control item being received, a second operation corresponding to the selected control item.

Meanwhile, the method may further include updating, based on at least one of the first user input and the second user input, the information on use history.

Meanwhile, the displaying a user interface may include performing the at least one first operation and then displaying the user interface, and the user interface may include at least one of a cancellation item for cancelling the at least one first operation performed and a change item for changing the at least one first operation performed to another operation.

According to one or more embodiments, in a non-transitory computer-readable recording medium including a program that executes a method for controlling of an electronic device, the method includes displaying content, obtaining information on context of the content, identifying, based on the information on context and information on use history of a user, at least one first operation requiring no confirmation of the user and at least one second operation requiring confirmation of the user among a plurality of operations relating to the content, performing the at least one first operation, and displaying a user interface relating to the at least one second operation.

### [Brief Description of Drawings]

Features and advantages according to one or more embodiments of the disclosure may be understood more clearly from following descriptions provided with reference to accompanying drawings, wherein:
FIG. 1 is a block diagram schematically illustrating a configuration of an electronic device according to one or more embodiments;
FIG. 2 is a block diagram illustrating a plurality of modules according to one or more embodiments;
FIGS. 3-6 are views provided to explain various embodiments relating to a user interface according to the disclosure;
FIG. 7 is a block diagram specifically illustrating a configuration of an electronic device according to one or more embodiments; and
FIG. 8 is a flowchart illustrating a method for controlling an electronic device according to one or more embodiments.

### [Mode for Invention]

Embodiments of the disclosure may be modified in various different forms, and may vary. Accordingly, specific embodiments are illustrated in the drawings, and described in the detailed description. However, it is to be understood that the embodiments set forth herein are not intended to limit the scope of the matter of the disclosure and are interpreted as including various modifications, equivalents and/or alternatives thereof. In describing the drawings, like reference numerals may be used to indicate like elements.

In describing the matter of the disclosure, if detailed descriptions of known functions or configurations to which the matter of the disclosure pertains make the gist of the disclosure unnecessarily vague, the descriptions are omitted.

Additionally, the embodiments described hereafter may be modified in various different forms, and it is to be understood that the scope of the technical spirit of the disclosure is not limited to the embodiments. Rather, the embodiments are provided to make the disclosure thorough and complete and to fully convey the technical spirit of the disclosure to those skilled in the art.

The terms set forth herein are merely used to describe specific examples, and are not intended to limit the scope of the right for which protection is sought. Unless explicitly stated otherwise, singular forms include plural forms as well.

In the disclosure, expressions such as "have," "may have," "include," or "may include," and the like are used to indicate the presence of a corresponding feature (e.g., a numerical value, a function, an operation, or an element such as a part and the like), and do not imply the exclusion of the presence of additional features.

In the disclosure, expressions such as "A or B," "at least one of A or/and B," or "one or more of A or/and B," and the like may include all possible combinations of the items listed together. For example, "A or B," "at least one of A and B," or "at least one of A or B" may refer to all cases including (1) at least one A, (2) at least one B, or (3) both of at least one A and at least one B.

In the disclosure, expressions such as "1^{st}," "2^{nd}," "first," or "second," and the like may be used to refer to various elements regardless of their order and/or importance, and may be merely used to differentiate one element from another but not intended to limit the elements.

Based on one element (e.g., a first element) referred to as being "(operatively or communicatively) coupled with/to or connected with/to" another element (e.g., a second element), it is to be understood that one element may be connected to another element directly or through yet another element (e.g., a third element).

On the other hand, based on one element (e.g., a first element) referred to as being "directly coupled with/to or connected with/to" another element (e.g., a second element), it is to be understood that yet another element (e.g., a third element) is not present between one element and another element.

The expression "configured to (or set to) ..." used herein may be used interchangeably with, for example, "suitable for ...," "having the capacity to ...," "designed to ...," "adapted to ...," "made to ...," or "capable of ..." depending on circumstances. The term "configured to (or set to) ..." may not necessarily mean "specifically designed to ..." hardwarewise.

Instead, in a certain situation, the expression "a device configured to ..." may mean "being capable of performing ..." by the device together with another device or other elements. For example, the phrase "a processor configured (or set) to perform A, B and C" may mean an exclusive processor (e.g., an embedded processor) for performing corresponding operations, or a generic-purpose processor (e.g., a CPU or an application processor) capable of performing corresponding operations by executing one or more software programs stored in a memory device.

In the embodiments, the term "module" or "unit" may perform at least one function or operation, and be implemented by hardware or software or by a combination of hardware and software. Additionally, multiple "modules" or multiple "units" may be integrated into at least one module and be implemented as at least one processor, excluding a "module" or a "unit" that needs to be implemented by specific hardware.

Meanwhile, various elements and regions in the drawings are schematically illustrated. Accordingly, the technical spirit of the disclosure is not limited by relative sizes or distances illustrated in the drawings.

Hereafter, the embodiments of the disclosure are described in detail with reference to the accompanying drawings, such that those skilled in the art to which the disclosure pertains readily implement the embodiments.

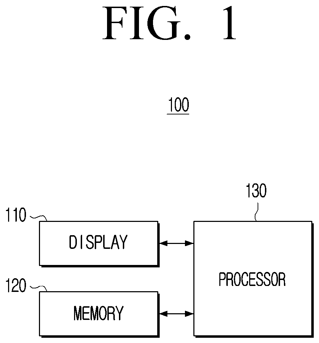

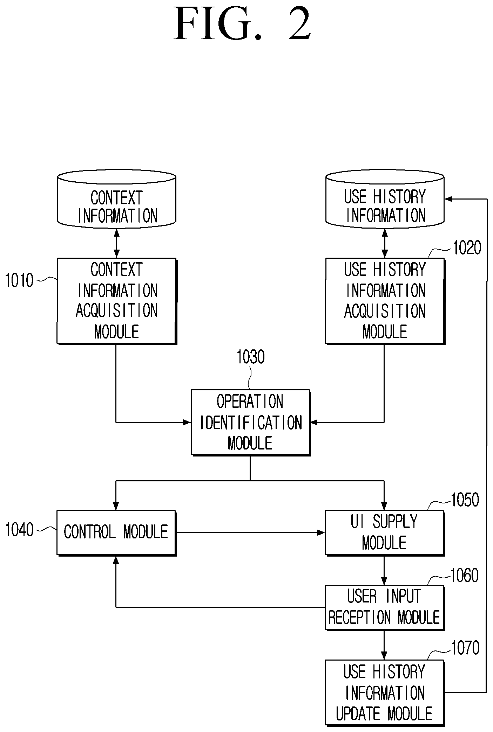

FIG. 1 is a block diagram schematically illustrating a configuration of an electronic device 100 according to one or more embodiments, and FIG. 2 is a block diagram illustrating a plurality of modules according to one or more embodiments.

As illustrated in FIG. 1, the electronic device 100 may include a display 110, memory 120 and one or more processors 130 (hereafter, simply referred to as "processor").

The "electronic device 100" according to one or more embodiments may refer to a device capable of providing a user interface for content. In detail, the electronic device 100 may display content on the display 110 of the electronic device 100, and provide a user interface for the content being displayed. For example, the electronic device 100 may be implemented as a TV, a smart monitor, a smartphone, a tablet PC and the like, but the type of electronic device 100 is not limited.

The display 110 may output an image under the control of the processor 130. In detail, the processor 130 may control the display 110 to display an image based on image data stored in the memory 120. The display 110 may also display a user interface stored in the memory 120. The display 110 may be implemented as a liquid crystal display (LCD) panel, an organic light emitting diode and the like, and in some cases, may also be implemented as a flexible display, a transparent display and the like. However, the display 110 according to the disclosure is not limited to a specific form.

In particular, according to one or more embodiments, the processor 130 may control the display 110 to display content. Herein, the content may include content received from an external device as well as content generated by the electronic device 100. The type of external device providing content is not limited, and the type of content is not limited either. For example, the content may include broadcast content, game content, Over-the-Top (OTT) content.

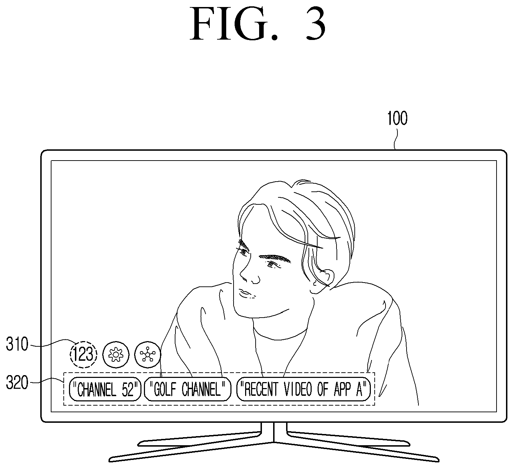

The processor 130 may control the display 110 to display the user interface. Various embodiments in relation to the user interface are described in detail with reference to FIGS. 3-6.

At least one instruction in relation to the electronic device 100 may be stored in the memory 120. Additionally, an operating system (O/S) for driving the electronic device 100 may be stored in the memory 120. Additionally, various types of software programs or applications for operating the electronic device 100 according to various embodiments may be stored in the memory 120. Further, the memory 120 may include semiconductor memory such as flash memory and the like or a magnetic storage media such as a hard disk and the like, and the like.

In detail, various types of software modules for operating the electronic device 100 according to the embodiments may be stored in the memory 120, and the processor 130 may execute various types of software modules stored in the memory 120 to control operations of the electronic device 100. In other words, the memory 120 may be accessed by the processor 130, and the processor 130 may perform reading/recording/correcting/deleting/updating and the like of data.

Meanwhile, the term memory 120 in the disclosure may be used in the way that the memory has a meaning including memory 140, ROM, RAM in the processor 130 or a memory card (e.g., a micro SD card, a memory stick) mounted in the electronic device 100.

According to one or more embodiments, information on use history of a user may be stored in the memory 120.

The "information on use history" may be a term for collectively referring to use history of a user in relation to at least one of the electronic device 100 and the external device, and may refer to use history of a specific user identified based on account information. The term "information on use history" may be simply replaced with a term such as "use history information," "user information," "user preference level" and the like.

The information on use history may include information on at least one of a frequency and a pattern in which a user uses at least one of the electronic device 100 and the external device under specific context. Herein, "specific context" may be defined in descriptions of "information on context".

For example, the information on use history may include information "The user set screen brightness of the electronic device 100 to 90/100 or greater" under specific context "Scheduled to see a movie in the afternoon". Additionally, the information on use history may include information "The user set screen brightness of the electronic device 100 to 90/100 or greater eight times (frequencies) out of ten times that is entire use history (pattern)" under the context "Scheduled to see a move in the afternoon".

Further, various types of information/data such as information on content, information on context, information on a user account, information on a plurality of identified operations, a first operation and a second operation, and the like may be stored in the memory 120. In addition, various types of information required within a range where the objective of the disclosure is achieved may be stored in the memory 120, and the information stored in the memory 120 may be received from the external device or input by a user, to be updated.

The processor 130 controls the operations of the electronic device 100 entirely. In detail, the processor 130 may be connected with the elements of the electronic device 100 including the display 110 and the memory 120 and execute at least one instruction stored in the memory 120 described above, to control the operations of the electronic device 100 entirely.

The processor 130 may be implemented in various different ways. For example, the processor 130 may be implemented as at least one among an application specific integrated circuit (ASIC), an embedded processor, a microprocessor, hardware control logic, a hardware finite state machine (FSM), a digital signal processor (DSP). Meanwhile, the term processor 130 in the disclosure may be used in the way that the term has a meaning including a central processing unit (CPU), a graphics processing unit (GPU) and a microprocessor unit (MPU) and the like.

In particular, the processor 130 may use a plurality of modules to implement the embodiments of the disclosure. The plurality of modules may be hardware modules or software modules, and two or more modules among the plurality of modules may be implemented as one integrated module. The plurality of modules may be implemented as a neural network model (i.e., an artificial intelligence (AI) model) including a neural network, and operated based on a rule.

As illustrated in FIG. 2, the plurality of modules may include a context information acquisition module 1010, a use history information acquisition module 1020, an operation identification module 1030, a control module 1040, a UI supply module, a user input reception module 1060 and a use history information update module 1070. Hereafter, for convenience of description, descriptions are provided under the assumption that all the plurality of modules is included in the electronic device 100 and is implemented based on on-device by the processor 130 included in the electronic device 100, but depending on embodiments, at least one module among the plurality of modules may be included in the external device.

Hereafter, various embodiments are described with reference to FIG. 1 and FIG. 2 together.

The processor 130 may obtain information on context of content. Referring to FIG. 2, the processor 130 may use the context information acquisition module 1010 to obtain information on context. The context information acquisition module 1010 may use various types of information/data stored in the memory 120 to obtain the information on context, and various types of information/data stored in the memory 120 may be generated by the electronic device 100, or received from the external device.

The "information on context" may be a term collectively referring to information such as an incident or a situation and the like that occurs at specific time and in a specific place, and replaced with "context information," "situation information" and the like.

The information on context may include at least one among type information indicating a content type, first state information indicating an operation state of the electronic device 100, second state information indicating an operation state of an external device relating to the electronic device 100, and third state information indicating exterior states of the electronic device 100 and the external device.

The "type information" may refer to information indicating the types of contents collectively, and the types of contents, for example, may be identified based on the genre (e.g., a move, a game, a sport, music, news, and an application screen and the like) of content, a supply source (e.g., broadcast content, OTT content, social media content and the like) of content.

The processor 130 may identify the type of content based on automatic content recognition (ACR) to obtain the type information indicating the type of content. Herein, ACR may include extracting the feature of an audio signal or a video signal corresponding to content, comparing the extracted feature with a database on features of contents stored in the memory 120, and identifying a matched content.

The processor 130 may obtain the type information indicating the type of content based on an electronic program guide (EPG), additional information (or metadata) on content, and the like. Herein, the EPG and the additional information on content may be received from the external device as a content supply source, and stored in the memory 120.

The processor 130 may input the information on content to a neural network model trained to distinguish the type of input content to obtain the type information indicating the type of content. Herein, the neural network model may include a convolution neural network (CNN) trained to identify a plurality of domains corresponding to the type of content, but the type of a neural network included on the neural network model is not limited.

The "first state information" may refer to information indicating operation states of the electronic device 100 collectively, and for example, include information on screen settings of the electronic device 100, information on sound settings of the electronic device 100, information on a power mode, information on a network connection state and the like. The first state information may be information indicating an operation state of the electronic device 100 relating to content displayed on the display 110 among the operation states of the electronic device 100.

The "second state information" refers to operation states of the external device collectively. Herein, the "external device" may be an IoT (Internet of Things) device registered as a device constituting an IoT network together with the electronic device 100. For example, the external device may be a device such as a user's smartphone, smart lighting, a smart speaker and the like, but not limited to the above-described example. The second state information may be information indicating an operation state of the external device relating to content displayed on the display 110 of the electronic device 100 among the operation states of the external device.

The "third state information" refers to exterior states of the electronic device 100 and the external device rather than interior states thereof collectively. In other words, the third state information may be a term for referring to information affecting control of content collectively excluding the operations of the electronic device 100 or the operations of the external device. For example, the third state information may include information on current time, information on current weather, information on a location of the electronic device 100 and the like.

The processor 130 may obtain information on use history of a user. Referring to FIG. 2, the processor 130 may use the use history information acquisition module 1020 to obtain the information on use history of a user. The use history information acquisition module 1020 may use various types of information/data stored in the memory 120 to obtain the information on use history of a user. The information on use history is described above when the memory 120 is described.

Meanwhile, the process in which the processor obtains the information on context and/or the information on use history may be performed based on occurrence of a predetermined event in the electronic device 100 or the external device, or based on a user input requesting a recommendation of a user interface, or in every predetermined cycle.

The processor 130 may identify at least one first operation requiring no confirmation of a user and at least one second operation requiring confirmation of the user among a plurality of operations relating to content, based on the information on context and the information on use history. Referring to FIG. 2, the operation identification module 1030 may identify, based on the information on context being received from the context information acquisition module 1010 and the information on use history being received from the use history information acquisition module 1020, the plurality of operations relating to content, the first operation and the second operation, according to the information on context and the information on use history.

In detail, the processor 130 may identify, based on the information on context and the information on use history, the plurality of operations relating to content, and identify (or distinguish), based on the information on context and the information on use history, the first operation and the second operation among the plurality of identified operations.

The "plurality of operations" refers to the operations of the electronic device 100 and the external device, which relate to content, collectively. In detail, the plurality of operations may include at least one of the content-relating operations of the electronic device 100 and the content-relating operations of the external device, and may mean operations that a user is highly likely to want to perform in current context. Meanwhile, the term "operation" according to the disclosure may be replaced with a term such as a "function," a "service," and the like.

The processor 130 may identify, based on the information on context and the information on use history, a plurality of operations corresponding to the information on context and the information on use history, among the operations of the electronic device 100 and the operations of the external device. The processor 130 may input the information on context and the information on use history to a neural network model trained to identify the plurality of operations corresponding to the information on context and the information on use history, to identify the plurality of operations.

For example, based on the information on context indicating that the type of content is a movie and that current time is 10 p.m., and the information on use history indicating that a user set screen brightness of the electronic device 100 to 90/100 with a frequency of 90 % when enjoying a movie and that smart lighting as an exterior device is turned off, the processor 130 may identify that an operation of controlling a replay of content, an operation of setting a subtitle of content, an operation of setting screen brightness of the electronic device 100 to 90/100, and an operation of turning off smart lighting as an external device are included in the plurality of operations.

The processor may identify the plurality of operations that are the content-relating operations of the electronic device 100 and the external device, and provide a user interface for the plurality of identified operations. However, in one or more embodiments, the processor may distinguish at least one first operation and at least one second operation among a plurality of operations, and perform different control depending on the first operation and the second operation.

The "first operation" may refer to operations requiring no confirmation of a user collectively among a plurality of content-relating operations. In the case where a plurality of operations is operations that a user is highly likely to want to perform in current context, the first operation may be an operation of which the user is highly likely to want the operation to be performed automatically in the current context. The first operation may be defined by the developer previously, or determined depending on user settings. Additionally, the first operation may be changed based on the information on use history being updated as described hereafter.

For example, user settings for the first operation may be automation settings. In the case where a user registers a specific operation as a target of automation, the operation may be preform without user confirmation, and since the operation meets user intent, may correspond to the first operation according to the disclosure. Herein, "automation" may mean registering a specific condition and an operation of an IoT device (e.g., an electronic device 100, an external device) corresponding to the specific condition, and performing, based on the registered condition being satisfied, automatic control such that the IoT device performs the registered operation. Additionally, the operation performed based on automation may be referred to as an "automated operation" or an "automated routine".

The "second operation" refers to operations requiring confirmation of a user collectively among a plurality of content-relating operations. In the case where a plurality of operations is operations that a user is highly likely to want to perform in current context, the second operation may be an operation that the user is highly likely to want to control directly in the current context. The second operation may be defined by the developer previously, or determined depending on user settings. Additionally, the second operation may be changed based on the information on use history being updated as described hereafter. The second operation means an operation excluding the first operation among the plurality of operations, and may be defined/set/changed depending on how the first operation is defined/set/changed.

As described above, the at least one first operation and the at least one second operation may be not only defined or set previously, but also identified by the processor 130.

According to one or more embodiments, the at least one first operation and the at least one second operation may also be identified based on the types of plurality of operations. In detail, among a plurality of operations, the processor 130 may identify, as a first operation, an operation corresponding to a predetermined type, and identify, as a second operation, an operation not corresponding to a predetermined type. Herein, the predetermined type may be changed by the developer or based on user settings.

For example, among a plurality of operations, the processor 130 may identify, as at least one first operation, an operation relating to screen settings and sound settings for content, and identify, a second operation, an operation not relating to screen settings and sound settings for content. As another example, among a plurality of operations, the processor 130 may identify, as a first operation, a mere turn-on and off operation (e.g., the on/off of a TV), and identify, as a second operation, an operation requiring a selection of an option (e.g., various washing modes of a washing machine).

In the above-described example, in the case where an operation of controlling a replay of content, an operation of setting a subtitle of content, an operation of setting screen brightness of the electronic device 100 to 90/100, and an operation of turning off smart lighting as an external device are identified as the plurality of operations, the processor 130 may identify, as the first operation, the operation of setting screen brightness of the electronic device 100 to 90/100 and the operation of turning off smart lighting as an external device, which are operations relating to screen settings and sound settings for content, among the plurality of operations. Additionally, the processor 130 may identify, as the second operation, the operation of controlling a replay of content and the operation of setting a subtitle of content that are operations not relating to screen settings and sound settings for content, among the plurality of operations.

In another example, the at least one first operation may include brightness optimization, screen mode conversion, sound optimization and the like, while the at least one second operation may include a change in channels, control of a surrounding IoT device, a change in content supply sources, and an application of an energy saving mode, and the like.

Based on the at least one first operation and the at least one second operation being identified, the processor 130 may perform the at least one first operation. Additionally, the processor 130 may control the display 110 to display a user interface for the at least one second operation.

Referring to FIG. 2, based on information on the at least one first operation identified being received from the operation identification module 1030, the control module 1040 may control the elements of the electronic device 100 to perform the at least one first operation. Referring to FIG. 2, based on information on the at least one second operation identified being received from the operation identification module 1030, the UI supply module may supply a user interface for the at least one second operation.

According to one or more embodiments, the user interface may include at least one control item corresponding to each of the at least one second operation. Additionally, based on a user input selecting one among the at least one control item being received, the processor 130 may perform a second operation corresponding to the selected control item. Referring to FIG. 2, the user input reception module 1060 may receive the user input after the user interface is supplied from the UI supply module, and transmit information on the use input to the control module 1040. Based on the information on the user input being received, the control module 1040 may control the elements of the electronic device 100 to perform an operation corresponding to the user input.

In other words, the processor 130 may perform, among a plurality of operations, at least one first operation requiring no confirmation of a user automatically, and in relation to a second operation requiring confirmation of the user, provide a user interface to receive a user input based on the confirmation of the user and perform an operation corresponding to the received user input.

According to one or more embodiments, in the case where the user input is received based on the user interface, the processor 130 may update the information on use history stored in the memory 120 according to the received user input. Referring to FIG. 2, the user input reception module 1060 may receive the user input and transmit the information on the user input to the use history information update module 1070.

Based on the information on use history being updated by the use history information update module 1070, the processor 130 may identify the plurality of operations relating to content, the first operation and the second operation according to the updated information on use history together with the information on context. For example, based on the information on use history indicating that a user often uses a brightness adjustment manually being obtained after a "brightness optimization" operation is identified as the first operation and performed automatically, the "brightness optimization operation" may be identified as the second operation.

Various embodiments relating to a user interface, and various embodiments relating to an update of the information on use history according to a user input are described in greater detail with reference to FIGS. 3-6.

According to one or more embodiments, the at least one first operation or the at least one second operation may include an operation of changing current content to another content, an operation of changing a current channel to another channel, an operation of changing an external input device providing current content to another device and the like. As described above, the electronic device 100 may play a role in recommending content to a user and automatically displaying the content, or recommending content that allows a user to perform control.

According to various embodiments, the electronic device 100 may provide a user interface fit for a user enjoying content. In particular, the electronic device 100 may use information on context of current content and information on use history of a user together, to identify a first operation that the user is highly likely to want to perform automatically, and a second operation the user is highly likely to want to control directly, and provide automatic control and a user interface to the user.

Accordingly, in a current situation, the user may be supplied with user experience optimal for an operation required by the user, with no need to input a plurality of manipulations for searching an operation of the electronic device 100 to be performed to obtain a desired result or for performing the operation.

FIGS. 3-6 are views provided to explain various embodiments relating to a user interface according to the disclosure.

As described above, the processor 130 may identify, based on information on context and information on use history, at least one first operation requiring no confirmation of a user and at least one second operation requiring confirmation of the user among a plurality of operations relating to content. Based on the at least one first operation and the at least one second operation being identified, the processor 130 may perform the at least one first operation, and control the display 110 to display a user interface relating to the at least one second operation. In detail, the processor 130 may obtain information for displaying the user interface relating to the at least one second operation, and based on the obtained information, control the display 110 to display the user interface relating to the at least one second operation.

The user interface may be provided based on a manipulation method of a user. For example, in the case where the user uses a remote control device, the user interface may be configured to ensure ease of a user input using a remote control device, and in the case where the user uses voice control, the user interface may include information that induces a voice utterance, and indicates a state in which voice recognition proceeds.

The user interface may include various types of information on the operations of the electronic device 100 and an item for controlling the operations of the electronic device 100. Hereafter, the term "item" may be used as a term referring to at least one among elements included in the user interface, and may be replaced with a term such as a "UI item," a "visual element," an "object" and the like. The number of items included in the user interface, in particular, the number and type of items corresponding to the at least one second operation may be defined previously, and vary depending on information on context.

The user interface may include a plurality of category items respectively corresponding to a plurality of categories relating to the at least one second operation. The "plurality of categories" may refer to a predetermined standard for categorizing the at least one second operation, and the term "category" may be replaced with a term such as a "class," a "group" and the like.

For example, the plurality of categories may include a change in content (e.g., a change in channels, a change in external inputs and the like), control of content settings (e.g., control of screen settings, control of sound settings and the like), control of an external device (e.g., control of an IoT device) and a selection of an external input (e.g., a change in content sources), but not be limited thereto. The plurality of category items may correspond respectively to the plurality of categories in the above-described example.

The processor 130 may identify the plurality of categories respectively corresponding to the at least one second operation, and include, in the user interface, the plurality of category items respectively corresponding to the plurality of identified categories.

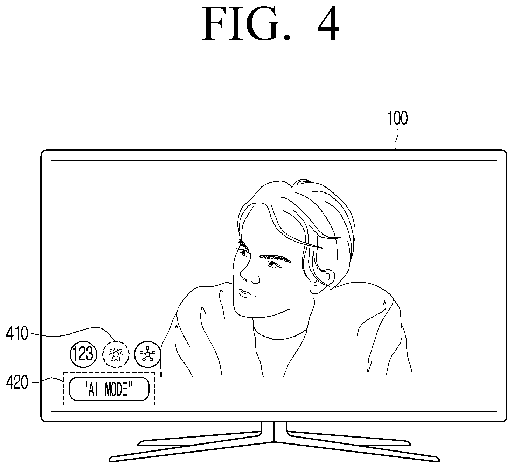

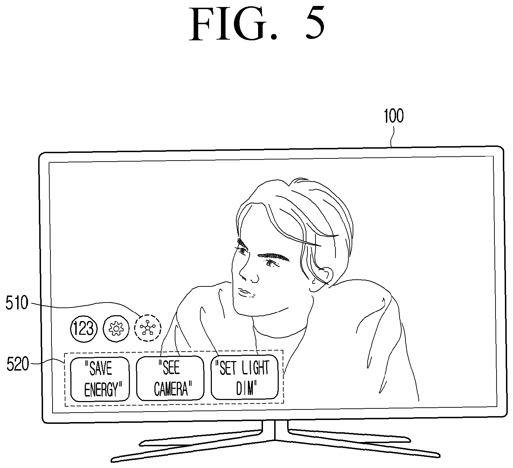

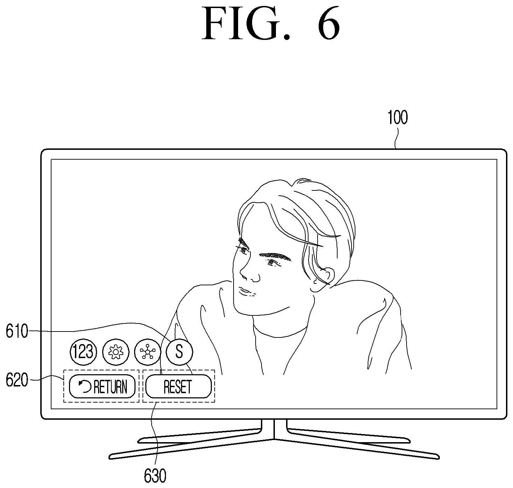

As illustrated in FIGS. 3-5, the plurality of category items may include a category item (e.g., 310 of FIG. 3) corresponding to a category such as "a change in content", a category item (e.g., 410 of FIG. 4) corresponding to a category such as "control of content settings", a category item (e.g., 510 of FIG. 5) corresponding to a category such as "control of an external device". Additionally, as illustrated in FIG. 6, the plurality of category items may further include a category item (e.g., 610 of FIG. 6) corresponding to a category such as "a selection of an external input".

Based on a first user input selecting one among the plurality of category items being received, the processor 130 may identify at least one first operation and at least one second operation among one or more operations corresponding to a selected category item, according to the information on context and the information in use history. Additionally, based on the at least one first operation and the at least one second operation being identified, the processor 130 may perform the at least one first operation, and control the display 110 to display a user interface for the at least one second operation.

The "first user input" is used as a term for referring to a user input selecting one among the plurality of category items. For example, the first user input may be received based on a user touch input through a touch display 110, a control signal received from a remote control device, a voice utterance of a user and the like. Additionally, the first user input may mean that a user moves a focus (or a cursor) displayed on the display 110 to one among the plurality of category items by using a remote control device. In addition to the first user input, various user inputs according to the disclosure may be input/received based on various methods as shown in the above-described examples.

In FIGS. 3-6, a circle drawn with a dotted line indicates one category item selected based on the first user input, among the plurality of category items. A method for indicating a selected category item may vary.

Referring to FIG. 3, the first user input may be a user input selecting category item 310 of "a change in content" among the plurality of category items. In this case, based on the information on context and the information on use history, the processor 130 may identify, as the at least one second operation, "move to No. 52," "move to a golf channel," "move to a recent video of app A" that are operations corresponding to category item 310 of "a change in content".

Referring to FIG. 4, the first user input may be a user input selecting category item 410 of "control of content settings" among the plurality of category items. In this case, based on the information on context and the information on use history, the processor 130 may identify, as the at least one second operation, "apply an AI mode" that is an operation corresponding to category item 410 of "control of content settings".

Referring to FIG. 5, the first user input may be a user input selecting category item 510 of "control of an external device" among the plurality of category items. In this case, based on the information on context and the information on use history, the processor 130 may identify, as the at least one second operation, "apply an air conditioner energy saving mode," "display a camera screen," and "set lighting dimly" that are operations corresponding to category item 510 of "control of an external device".

Since the processor 130 may display a user interface for the at least one second operation, in particular, the user interface may include at least one control item corresponding to each of the at least one second operation. Additionally, based on a second user input selecting one among the at least one control item being received, the processor 130 may perform a second operation corresponding to a selected control item.

The "second user input" is used as a term for referring to a user input selecting one among the at least one control item. The second user input may be received based on a user touch input through a touch display 110, a control signal received from a remote control device, a voice utterance of a user and the like.

In the example of FIG. 3, the user interface may include control items 320 corresponding respectively to "move to No. 52," "move to a golf channel," "move to a recent video of app A". In the example of FIG. 4, the user interface may include control items 420 corresponding to "apply an AI mode". Additionally, in the example of FIG. 5, the user interface may include control items 520 corresponding respectively to "apply an air conditioner energy saving mode," "display a camera screen," and "set lighting dimly". Further, based on one among the control items 320, 420, 520 in the above-described example being selected, the processor 130 may perform the second operation corresponding to the selected control item.

As described above, the user interface may include items (e.g., a plurality of category items and at least one control item) relating to the at least one second operation. In addition, the user interface may further include an item relating to the at least one first operation. In other words, even after performing the at least one first operation automatically, the processor 130 may include, in the user interface, the item relating to the at least one first operation performed, to allow a user to control the at least one first operation manually, when necessary.

In detail, the processor 130 may control the display 110 to display the user interface after performing the at least one first operation, and in this case, the user interface may include at least one of a cancellation item for canceling the at least one first operation performed and a change item for changing the at least one first operation performed to another operation.

A "return" item 620 in FIG. 6 indicates an example of a cancellation item for canceling (or recovering, returning, rollbacking) the at least one first operation performed, and a "resetting" item 630 in FIG. 6 indicates an example of a change item for changing the at least one first operation performed to another operation.

Based on a user input selecting the cancellation item being received, the processor 130 may cancel the at least one first operation performed, to return to a state prior to the state where the at least one first operation is performed. Based on a user input selecting the change item being received, the processor 130 may display items for changing the at least one first operation performed or display a new user interface.

Unlike the example of FIG. 6, the change item may also include items corresponding respectively to operations different from the first operation. For example, the change item may also include a thumbnail image indicating a result of application of each of various screen modes.

According to one or more embodiments, the processor 130 may identify, based on the information on context and the information on use history, a priority of each of a plurality of operations. For example, the processor 130 may identify the priority of each of the plurality of operations, in the order of a high frequency of use history of a user, corresponding to current context.

The processor 130 may identify, based on the identified priority, one or more second operations to be displayed on the user interface, among the at least one second operation. Referring back to the example of FIG. 3, in the case where the number of the second operations displayable on the user interface is three, the processor 130 may identify, in the order of high priorities, three second operations such as "move to No. 52," "move to a golf channel," "move to a recent video of app A" among the at least one second operation identified.

The user interface may include information on a priority of each of one or more second operations to be displayed on the user interface. For example, in the example of FIG. 3, the control items 320 corresponding respectively to "move to No. 52," "move to a golf channel," "move to a recent video of app A" from the left may be displayed as the user interface, and the order may be the order of high identified priorities, displayed from the left.

On the contrary, the user interface may also indicate a priority of each of the second operations directly, as a number is displayed around each of the control items. Additionally, the processor 130 may also place a default focus on a control item corresponding to a second operation of a highest priority.

According to the above embodiment, the processor 130 may first provide, based on a priority, a function most appropriate for current context and use history of a user.

The user interface may also include a message for notifying a user that at least one first operation is performed automatically. For example, the user interface may include a message for notifying a user that the at least one first operation is performed automatically, such as "A screen mode is changed automatically to a game mode."

Above, various types of items displayed on the user interface and various user inputs selecting the items are described. However, the processor 130 may update, based on various user inputs input through the user interface, the information on use history.

In detail, the processor 130 may update, based on at least one of a first user input as a user input selecting one among a plurality of category items and a second user input as a user input selecting one among at least one control item, the information on use history. Additionally, the processor 130 may also update, based on at least one of a user input selecting a cancellation item to cancel a first operation performed automatically and a user input selecting a change item to change the first operation performed automatically to another operation, the information on use history.

Then the processor 130 may identify, based on the information on use history being updated, a plurality of operations relating to content, a first operation, and a second operation, according to the updated information on use history together with the information on context.

For example, in the case where the information on context indicates "game content being displayed currently", the processor 130 may identify, as one among the plurality of operations relating to content, an operation of "changing a screen mode of the electronic device 100 to a game mode". Before the information on use history is sufficiently updated, the operation of "changing a screen mode of the electronic device 100 to a game mode" may also be identified as the first operation depending on default settings. \ Then, based on the information on use history indicating that a user changes a screen mode to various modes being updated depending on the sort of game, according to a user input, the operation of "changing a screen mode of the electronic device 100 to a game mode" may be identified as the second operation according to the updated information on use history.

In the above-described example, before the information on use history is sufficiently updated, the operation of "changing a screen mode of the electronic device 100 to a game mode" may also be identified as the second operation rather than the first operation depending on default settings. Then, based on the information on use history indicating that when playing a game, a user changes a screen mode of the electronic device 100 to a game mode with a high frequency being updated, according to a user input, the operation of "changing a screen mode of the electronic device 100 to a game mode" may be identified as the first operation based on the updated information on use history and performed automatically. This means generating a routine for each user based on updating the information on use history and providing the routine. Meanwhile, a user, as described above, may register a specific operation as a target of automation, to set the specific operation as the first operation of the disclosure.

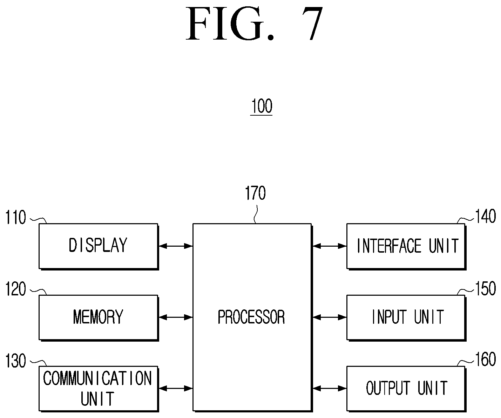

FIG. 7 is a block diagram specifically illustrating a configuration of an electronic device 100 according to one or more embodiments.

The electronic device 100 may further include a communication unit 130, an interface unit 150, an input unit 160, and an output unit 170 as well as the display 110, the memory 120 and the processor 130. However, the elements illustrated in FIGS. 1 and 7 are described as examples, and certainly, new elements may be further added in addition to the elements of FIGS. 1 and 7, or part of the elements of FIGS. 1 and 7 may be omitted, when implementing the matter of the disclosure.

The communication unit 140 may include circuitry, and perform communication with an external device. In detail, the processor 130 may receive various types of data or information from the external device connected thereto through the communication unit 140, and also transmit various types of data or information to the external device.

The communication unit 140 may include at least one among a WiFi module, a Bluetooth module, a wireless communication module, an NFC module and an ultra-wide band (UWB) module. In detail, each of the WiFi module and the Bluetooth module may perform communication based on a WiFi method and a Bluetooth method. In the case where the WiFi module or the Bluetooth is used, various types of connection information such as an SSID and the like may be first transmitted and received, and are used to perform a communication connection and then transmit and receive various types of information.

Additionally, the wireless communication module may perform communication according to various communication standards such as IEEE, Zigbee, 3rd Generation (3G), 3rd Generation Partnership Project (3GPP), Long Term Evolution (LTE), 5th Generation (5G) and the like. Further, the NFC module may perform communication based on a near field communication (NFC) method using a 13.56 MHz band among various RF-ID frequency bands such as 135 kHz, 13.56 MHz, 433 MHz, 860-960 MHz, 2.45 GHz and the like. Furthermore, the UWB nodule may measure time of arrival (ToA) that is time taken for a pulse to arrive at an object, and an angle of arrival (AoA) that is a pulse arrival angle in a transmitting device accurately, based on communication between UWB antennas, and accordingly, may recognize a distance and a position precisely in an indoor space, within an error range of dozens of centimeters.

In particular, according to one or more embodiments, the processor 130 may receive, through the communication unit 140, information on use history, information on context and the like from an external device. Additionally, in the case where at least one first operation or second operation identified is an operation of the external device, the processor 130 may control the communication unit 140 to transmit, to the external device, information on at least one first operation or information on at least one second operation. As a result, the external device may perform, based on the information on at least one first operation, the first operation, and display, based on the information on at least one second operation, the user interface on a display 110 of the external device.

The interface unit 150 may transceive video data and/or audio data in its relationship with the external device. In detail, the interface unit 150 may include an input port capable of receiving video data and/or audio data from the external device and an output port capable of transmitting video data and/or audio data to the external device. In particular, in the case where the interface unit 150 can transceive both the video data and the audio data, an input/output port capable of transceiving video data and audio data may be implemented separately. The interface unit 150 may connect the electronic device 100 and the external device in a wired manner through a cable, but may also connect the electronic device 100 and the external device in a wireless manner.

For example, the interface unit 150 may include a High-Definition Multimedia Interface (HDMI) module, a Universal Serial Bus (USB) module and the like. The HDMI module as one of uncompressed digital video/audio interface standards may provide an interface between the electronic device 100 and an external device providing contents. The USB module may use a predefined input/output standard protocol to provide a communication system between the electronic device 100 and the external device providing contents. In addition to the HDMI module and USB module, the interface unit 150 may certainly be implemented as various types of modules such as a Display Port (DP) module, an RGB module, a Digital Visual Interface (DVI) module and a thunderbolt module and the like for providing an input/output of video/voice data between the electronic device 100 and an external device.

In particular, according to various embodiments of the disclosure, the processor 130 may receive data on content from the external device through the interface unit 150. Additionally, the processor 130 may transmit data for changing content to the external device through the interface unit 150.

The input unit 160 may include circuitry, and the processor 130 may receive a user command for controlling an operation of the electronic device 100 through the input unit 160. In detail, the input unit 160 may be comprised of elements such as a microphone, a camera, a remote controller signal receiver and the like. Additionally, the input unit 160 may be implemented in the way that the input unit 160 as a touch screen is included in the display 110. In particular, the microphone may receive a voice signal, and convert the received voice signal to an electric signal.

The output unit 170 may include circuitry, and the processor 130 may output various functions performable by the electronic device 100 through the output unit 170. Additionally, the output unit 170 may include at least one among a display 110, a speaker and an indicator. The display 110 is described with reference to FIG. 1, and accordingly, repetitive descriptions of identical particulars thereof are omitted.

The speaker may output audio data under the control of the processor 130.

The indicator may light up under the control of the processor 130. In detail, the indicator may light up in various colors under the control of the processor 130. For example, the indicator may be implemented as a light emitting diode (LED), a liquid crystal display (LCD) panel, a vacuum fluorescent display (VFD) and the like, but not limited thereto.

In particular, according to one or more embodiments, the processor 130 may control the display 110 to display a user interface, and the user interface may include a plurality of category items corresponding respectively to a plurality of categories relating to at least one second operation.

Based on a first user input selecting one among the plurality of category items being received through the input unit 160, the processor 130 may identify, based on information on context and information on use history, at least one first operation and at least one second operation among one or more operations corresponding to the selected category item, and control the display 110 to display a user interface relating to the at least one second operation.

The user interface may include at least one control item corresponding respectively to the at least one second operation, and based on a second user input selecting one among the at least one control item being received, the processor 130 may perform the second operation corresponding to the selected control item. The other different types of user interfaces are described above with reference to FIGS. 3-6.

Meanwhile, the processor 130 may control the speaker to output a voice corresponding to the above-described user interface, and receive a user voice through the microphone to receive the above-described user input. To this end, the processor 130 may input text information corresponding to the user interface to a speech synthesis model (e.g., a Text-to-Speech (TTS) model) to obtain a voice corresponding to the user interface. Additionally, the processor 130 may input the user voice received through the microphone to a speech recognition model (e.g., an Automatic Speech Recognition (ASR) model) to obtain text information corresponding to a user input. The user interface may include an item inducing a voice utterance of a user.

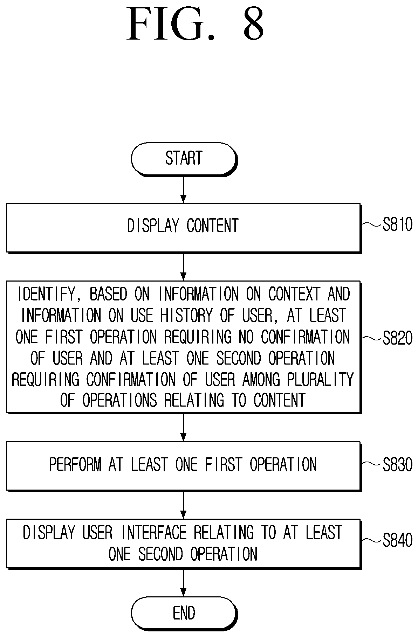

FIG. 8 is a flowchart illustrating a method for controlling an electronic device 100 according to one or more embodiments.

As illustrated in FIG. 8, the electronic device 100 may display content (S810). The content may include content received from an external device as well as content generated by the electronic device 100. The type of external device providing content is not limited, and the type of content is not limited, either.

The electronic device 100 may identify, based on information on context and information on use history of a user, at least one first operation requiring no confirmation of a user and at least one second operation requiring confirmation of the user among a plurality of operations relating to content (S820).

In detail, the electronic device 100 may identify, based on the information on context and the information on use history, the plurality of operations relating to content, and identify (or distinguish), based on the information on context and the information on use history, the first operation and the second operation among the plurality of identified operations.

The at least one first operation and the at least one second operation may also be identified based on the types of plurality of operations. In detail, the electronic device 100 may identify, as the first operation, an operation corresponding to a preset type among the plurality of operations, and identify, as the second operation, an operation not corresponding to the preset type.

The electronic device 100 may perform the at least one first operation (S830). The electronic device 100 may display a user interface relating to the at least one second operation (S840).

According to one or more embodiments, the user interface may include at least one control item corresponding respectively to the at least one second operation. Additionally, based on a user input selecting one among the at least one control item being received, the electronic device 100 may perform the second operation corresponding to the selected control item.

According to one or more embodiments, in the case where the user input is received based on the user interface, the electronic device 100 may update the information on use history stored in memory 120 according to the received user input.

Meanwhile, the method for controlling an electronic device 100 according to the above-described embodiments may be implemented as a program and provided to the electronic device 100. In particular, the program including the method for controlling an electronic device 100 may be stored and provided in a non-transitory computer-readable medium.

In detail, in a non-transitory computer-readable recording medium including a program executing a method for controlling an electronic device 100, the method may include displaying content, obtaining information on context of the content, identifying, based on the information on context and information on use history of a user, at least one first operation requiring no confirmation of a user and at least one second operation requiring confirmation of the user among a plurality of operations relating to the content, and performing the at least one first operation and displaying a user interface relating to the at least one second operation.

Above, a method for controlling an electronic device 100, and a computer-readable recording medium including a program executing the method for controlling an electronic device 100 are described schematically, but the schematic descriptions are merely to avoid repetition, and various embodiments relating to the electronic device 100 may certainly be applied to a method for controlling the electronic device 100, and a computer-readable recording medium including a program executing the method for controlling the electronic device 100.

Functions relating to AI according to the disclosure may be performed through the processor 130 and the memory 120 of the electronic device 100.

The processor 130 may be comprised of one processor 130 or a plurality of processors 130. At this time, one processor 130 or a plurality of processors 130 may include at least one among a central processing unit (CPU), a graphic processing unit (GPU), and a neural processing unit (NPU), but not be limited to the above-described examples of the processor 130.

The CPU, as a generic-purpose processor 130 capable of performing an AI computation as well as an ordinary computation, may efficiently execute a complex program through a multi-level cache structure. The CPU is advantageous in a series processing method enabling an organic connection between previous calculation results and following calculation results based on a consecutive calculation. The generic-purpose processor 130 is not limited to the above example, unless explicitly indicated as the above-described CPU.

The GPU, as a processor 130 for a massive computation such as a floating-point computation and the like used to process graphics, may perform a massive computation in parallel by integrating cores in massive amounts. In particular, the GPU may have an advantage over the CPU in a parallel processing method such as a convolution computation and the like. Additionally, the GPU may be used as a co-processor 130 for complementing a function of the CPU. A processor 130 for a massive computation is not limited to the above example, unless explicitly indicated as the above-described GPU.

The NPU, as a processor 130 specializing in an AI computation using an artificial neural network, may be implemented in the way that each layer constituting an artificial neural network is implemented with hardware (e.g., silicon). At this time, since the NPU is designed specially according to specifications required by a business, a freedom degree of the NPU is less than that of the CPU or the GPU, but the NPU may process an AI computation required by a business efficiently. Meanwhile, as a processor 130 specializing in an AI computation, the NPU may be implemented in various different forms such as a tensor processing unit (TPU), an intelligence processing unit (IPU), a vision processing unit (VPU) and the like. The AI processor 130 is not limited to the above examples, unless explicitly indicated as the above-described NPU.

Additionally, one processor or a plurality of processors 130 may be implemented as a system on a chip (SoC). At this time, memory 120, and a network interface such as a bus and the like for data communication between the processor 130 and the memory 120 may be further included, in addition to the one processor or the plurality of processors 130, in the SoC.

In the case where a plurality of processors 130 is included in a system on a chip (SoC) included in the electronic device 100, the electronic device 100 may perform an AI-relating computation (e.g., a computation relating to learning or inference of an AI model) by using part of the plurality of processors 130. For example, the electronic device 100 may certainly perform an AI-relating computation by using at least one among a GPU, an NPU, a VPU, a TPU, and a hardware accelerator specializing in an AI computation such as a convolution computation, a matrix multiplication computation and the like, among the plurality of processors 130.

Additionally, the electronic device 100 may perform a computation associated with an AI-relating function by using a multi core (e.g., a dual core, a quad core and the like) included in one processor 130. In particular, the electronic device 100 may perform an AI computation such as a convolution computation, a matrix multiplication computation and the like in parallel by using a multi core included in the processor 130.

The one processor or the plurality of processors 103 may perform control to process input data, according to a predefined operation rule or an AI model that is stored in the memory 120. The predefined operation rule or the AI model is characterized in that the predefined operation rule or the AI model is made based on learning.

Herein, making the predefined operation rule or the AI model based on learning means making a predefined operation rule or an AI model of a desired feature, by applying a learning algorithm to large numbers of learning data. Such learning may be performed in a device itself in which AI according to the disclosure is performed, or performed through a separate server/system.

The AI model may be comprised of a plurality of neural network layers. At least one layer has at least one weight value, and a computation of the layers is performed through results of a computation of a previous layer and at least one defined computation. Examples of the neural network may include a convolutional neural network (CNN), a deep neural network (DNN), a recurrent neural network (RNN), a restricted boltzmann machine (RBM), a deep belief network (DBN), a bidirectional recurrent deep neural network (BRDNN), and a deep Q-network, and a transformer, but the neural network in the disclosure is not limited to the above examples, unless explicitly stated otherwise.

The learning algorithm is a method by which a predetermined target device (e.g., a robot) is trained by using a large number of learning data, enabling the predetermined target device to make its own decision or prediction. Examples of the learning algorithm may include supervised learning, unsupervised learning, semi-supervised learning or reinforcement learning, but the learning algorithm in the disclosure is not limited to the above examples, unless explicitly stated otherwise.

Meanwhile, a machine-readable storage medium may be provided in the form of a non-transitory storage medium. Herein, the "non-transitory storage medium" only means a tangible device and means including no signal (e.g., electromagnetic waves) while the term does not distinguish semi-permanent or temporary storage of data in the storage medium. For example, the "non-transitory storage medium" may include a buffer where data are temporarily stored.

The method according to the embodiments set forth herein may be provided in a computer program product. The computer program product may be exchanged between a seller and a purchaser as a commodity. The computer program product may be distributed in the form of a machine-readable storage medium (e.g., compact disc read only memory (CD-ROM)), or distributed (e.g., downloaded or uploaded) online through an application store (e.g., Play Store^{™}) or directly between two user devices (e.g., smartphones). In the case of online distribution, at least part of the computer program product (e.g., a downloadable app) may be stored at least temporarily, or generated temporarily in a machine-readable storage medium such as a manufacturer's server, a server of an application store, or memory 120 of a relay server.

Further, each of the elements (e.g., modules or programs) according to the embodiments described above may be comprised of a single entity or a plurality of entities, and some of the corresponding sub elements described above may be omitted, or another sub element may be further included in the embodiments. Alternatively or additionally, some of the elements (e.g., modules or programs) may be integrated into one entity to perform functions performed by each corresponding element prior to the integration, in an identical way or a similar way.

Operations performed by a module, a program, or another element, according to the embodiments, may be executed sequentially, in parallel, repetitively, or heuristically, or at least some of the operations may be executed in a different order, omitted, or another operation may be added to the operations.

Meanwhile, the term "unit" or "module" used herein may include a unit comprised of hardware, software or firmware, and for example, may be used interchangeably as terms such as logic, a logical block, a part, or circuitry. The unit" or "module" may be an integrally configured part or a minimum unit or a part thereof performing one or more functions. For example, the module may be comprised of an application-specific integrated circuit (ASIC).

The embodiments set forth herein may be implemented with software including instructions stored in a storage medium readable by a machine (e.g., a computer). The machine, as a device capable of calling the stored instructions from the storage medium and operating according to the called instructions, may include the electronic device (e.g., an electronic device 100) according to the embodiments set forth herein.

Based on the instructions being executed by a processor, the processor may perform functions corresponding to the instructions directly or by using other elements under the control of the processor. The instructions may include a code generated or executed by a compiler or an interpreter.

While example embodiments of the disclosure are illustrated and described above, embodiments of the disclosure are not limited to specific embodiments set forth herein, and certainly, various modifications thereof may be made by those skilled in the art, without departing from the matter of the disclosure, claimed in the section of claims, and should not be understood as separating from the technical spirit or prospect of the disclosure.

## Claims

1. An electronic device comprising:
a display;
memory storing information on use history of a user; and
one or more processors,
wherein the one or more processors control the display to display content,
obtain information on context of the content,
identify, based on the information on context and the information on use history, at least one first operation requiring no confirmation of the user and at least one second operation requiring confirmation of the user among a plurality of operations relating to the content,
perform the at least one first operation, and
control the display to display a user interface relating to the at least one second operation.

2. The electronic device of claim 1,
wherein the information on context includes at least one among type information indicating a type of the content, first state information indicating an operation state of the electronic device, second state information indicating an operation state of an external device relating to the electronic device, and third state information indicating external states of the electronic device and the external device.

3. The electronic device of claim 2,
wherein the information on use history includes information on at least one of a frequency and a pattern in which the user uses at least one of the electronic device and the external device while the type of content is displayed on the display.

4. The electronic device of claim 1,
wherein the plurality of operations includes at least one of an operation of the electronic device, relating to the content, and an operation of the external device, relating to the content.

5. The electronic device of claim 1,
wherein the one or more processors identify, as the at least one first operation, an operation associated with screen settings and sound settings relating to the content among the plurality of operations.

6. The electronic device of claim 1,
wherein the user interface includes a plurality of category items respectively corresponding to a plurality of categories relating to the at least one second operation, and
wherein the one or more processors identify, based on a first user input selecting one among the plurality of category items being received, the at least one first operation and the at least one second operation among one or more operations corresponding to the selected category item, according to the information on context and the information on use history.

7. The electronic device of claim 6,
wherein the user interface includes at least one control item corresponding respectively to the at least one second operation, and
wherein the one or more processors perform, based on a second user input selecting one among the at least one control item being received, a second operation corresponding to the selected control item.

8. The electronic device of claim 7,
wherein the one or more processors update, based on at least one of the first user input and the second user input, the information on use history.

9. The electronic device of claim 1,
wherein the one or more processors perform the at least one first operation, and then control the display to display the user interface, and
wherein the user interface includes at least one of a cancellation item for cancelling the at least one first operation performed and a change item for changing the at least one first operation performed to another operation.

10. The electronic device of claim 1,
wherein the one or more processors identify, based on the information on context and the information on use history, a priority of each of the plurality of operations, and
identify, based on the priority, one or more second operations to be displayed on the user interface among the at least one second operation, and
wherein the user interface includes information on the priority of each of the one or more second operations.

11. A method for controlling an electronic device, the method comprising:
displaying content,
obtaining information on context of the content,
identifying, based on the information on context and information on use history of a user, at least one first operation requiring no confirmation of the user and at least one second operation requiring confirmation of the user among a plurality of operations relating to the content,
performing the at least one first operation, and
displaying a user interface relating to the at least one second operation.

12. The method of claim 11,
wherein the information on context includes at least one among type information indicating a type of the content, first state information indicating an operation state of the electronic device, second state information indicating an operation state of an external device relating to the electronic device, and third state information indicating external states of the electronic device and the external device.

13. The method of claim 12,
wherein the information on use history includes information on at least one of a frequency and a pattern in which the user uses at least one of the electronic device and the external device while the type of content is displayed on the display.

14. The method of claim 11,
wherein the plurality of operations includes at least one of an operation of the electronic device, relating to the content, and an operation of the external device, relating to the content.

15. The method of claim 11,
the identifying comprising:
identifying, as the at least one first operation, an operation associated with screen settings and sound settings relating to the content among the plurality of operations.
